# EUROPÄISCHE PATENTSCHRIFT

(11) **EP 2 266 002 B1**
(45) Veröffentlichungstag und Bekanntmachung des Hinweises auf die Patenterteilung: **19.07.2017**
(21) Anmeldenummer: 09731854.7
(22) Anmeldetag: 06.03.2009
(51) Int. Cl.: H04L 12/40, G05B 19/042

(54) **VERFAHREN ZUM BETREIBEN EINER SICHERHEITSSTEUERUNG UND AUTOMATISIERUNGSNETZWERK MIT EINER SOLCHEN SICHERHEITSSTEUERUNG**
METHOD FOR OPERATING A SAFETY CONTROLLER AND AUTOMATION NETWORK HAVING SUCH A SAFETY CONTROLLER
PROCÉDÉ D'UTILISATION D'UNE COMMANDE DE SÉCURITÉ ET RÉSEAU D'AUTOMATISATION DOTÉ D'UNE TELLE COMMANDE DE SÉCURITÉ

(30) Priorität: 17.04.2008 DE 102008019195
(43) Veröffentlichungstag der Anmeldung: 29.12.2010
(73) Patentinhaber: Beckhoff Automation GmbH, 33415 Verl (DE)
(72) Erfinder: SACHS, Jens, 32469 Petershagen (DE); BÜTTNER, Holger, 12157 Berlin (DE); JANSSEN, Dirk, 33415 Verl (DE); BECKMANN, Guido, 33415 Verl (DE)
(74) Vertreter: Patentanwaltskanzlei WILHELM & BECK
(86) Internationale Anmeldenummer: PCT/EP2009/052673
(87) Internationale Veröffentlichungsnummer: WO 2009/127470

(56) Entgegenhaltungen:
- EP-A2- 1 224 510
- WO-A-2006/069762
- WO-A-2007/051595
- DE-B3-102006 051 222
- US-A1- 2006 120 390

## Beschreibung

Die Erfindung betrifft ein Verfahren zum Betreiben von Sicherheitssteuerungen auf Automatisierungsnetzwerken mit jeweils einem die Sicherheitssteuerung ausführenden Master-Teilnehmer und ein Netzwerk aus Automatisierungsnetzwerk mit jeweils einem eine Sicherheitssteuerung ausführenden Master-Teilnehmer.

Moderne Konzepte der Industrieautomation, d.h. der Steuerung und Überwachung von technischen Prozessen mit Hilfe von Software, beruhen auf der Idee einer zentralen Steuerung mit verteilter Sensor-/Aktorebene. Die Teilnehmer kommunizieren dabei untereinander und mit übergeordneten Systemen über industrielle Lokalnetzwerke, im Weiteren auch als Automatisierungsnetzwerke bezeichnet. Die Steuerungsfunktion beruht auf zwei Grundideen, der geographischen Dezentralisierung und der hierarchischen Aufteilung der Steuerungsfunktionen. Die funktionelle Hierarchie teilt die Automatisierungsaufgabe dabei im Wesentlichen in eine Steuerungsebene und eine Sensor-/Aktorebene ein. Die industriellen Lokalnetzwerke sind in der Regel als sogenannte Master-Slave-Kommunikationsnetze ausgelegt, bei denen der Master-Teilnehmer die Steuerungsebene und die Slave-Teilnehmer die Sensor-/Aktorebene bildet.

Eine wesentliche Anforderung in der Industrieautomation ist die Sicherheit. Es muss bei der Ausführung von Automatisierungsaufgaben sichergestellt sein, dass vom Master-Slave-Kommunikationsnetz, wenn es ausfällt oder wenn andere Fehler auftreten, keine Gefahr für Mensch und Umwelt ausgeht. Automatisierungsnetzwerke arbeiten deshalb in der Regel nach dem sogenannten Fail-Safe-Prinzip, gemäß dem das Automatisierungsnetzwerk bei Ausfall eines sicherheitsrelevanten Teilnehmers in einen sicheren Zustand übergeht.

Eine Problemstellung der Sicherheitstechnik im Rahmen der Industrieautomation ist es, beim Austausch bzw. bei der Neuinbetriebnahme eines sicherheitsrelevanten Teilnehmers im Automatisierungsnetzwerk Maßnahmen vorzusehen, die zuverlässig Fehler bei diesen Vorgängen vermeiden. Beim Austausch bzw. der Neuinbetriebnahme eines sicherheitsrelevanten Teilnehmers im Automatisierungssystem ist es in der Regel notwendig, die anlagenspezifisch sichere Konfiguration des Teilnehmers, im Weiteren auch als Sicherheitssteuerung bezeichnet, in den ausgetauschten bzw. neu installierten sicherheitsrelevanten Teilnehmer zu laden.

Die anlagenspezifisch sichere Konfiguration ist in der Regel als Backup auf einem weiteren Teilnehmer im industriellen Lokalnetzwerk gespeichert. Nur mit einer speziellen Berechtigung ist es einem Service-Mitarbeiter im Allgemeinen erlaubt, die Sicherheitssteuerung von dem Backup-Speicher in den sicherheitsrelevanten Teilnehmer herunterzuladen. Statt eines Herunterladens über das Automatisierungsnetzwerk besteht auch die Möglichkeit, den Backup-Speicher direkt an den sicherheitsrelevanten Teilnehmer anzustecken, um die anlagenspezifisch sichere Konfiguration zu übertragen. Grundsätzlich besteht jedoch bei der Installation der Sicherheitssteuerung immer die Gefahr, dass der Service-Mitarbeiter aus Versehen die falsche Konfiguration einspielt. Es ist deshalb ein hoher organisatorischer Aufwand zur Gewährleistung einer ausreichenden Sicherheit beim Austausch bzw. bei der Neuinstallation des sicherheitsrelevanten Teilnehmers notwendig.

Um, statt mithilfe eines Service-Mitarbeiters, ein automatisch sicheres Laden der Sicherheitssteuerung in den sicherheitsrelevanten Teilnehmer zu gewährleisten, werden Backup-Systeme verwendet, bei denen die anlagenspezifisch sicherheitsrelevante Konfiguration in einem ortsfesten Backup-Speicher, der zum Beispiel im Anschlussstecker des sicherheitsrelevanten Teilnehmers angeordnet ist, abgelegt wird. Es besteht dann die Möglichkeit eines automatischen Hochladens der anlagenspezifisch sicheren Konfiguration in den sicherheitsrelevanten Teilnehmer, solange der ortsfeste Backup-Speicher intakt ist, also z.B. beim Ausfall des sicherheitsrelevanten Teilnehmers nicht beschädigt wurde. Bei solchen automatischen Backup-Systemen ist aber ein hoher Hardwareaufwand gegeben, da jeder sicherheitsrelevante Teilnehmer einen eingeständigen, ihm zugeordneten ortsfesten Backup-Speicher benötigt.

Das Problem eines fehlerhaften Einspielens einer anlagenspezifisch sicheren Konfiguration auf einen sicherheitsrelevanten Teilnehmer im Automatisierungsnetzwerk sowohl beim Austausch des sicherheitsrelevanten Teilnehmers als auch bei der ersten Inbetriebnahme besteht insbesondere auch dann, wenn mehrere Automatisierungsnetzwerke miteinander gekoppelt sind, wobei auf den einzelnen industriellen Lokalnetzwerken unterschiedliche Sicherheitssteuerungen laufen und damit unterschiedliche anlagenspezifisch sichere Konfigurationen in die sicherheitsrelevanten Teilnehmer der einzelnen industriellen Lokalnetze geladen werden müssen. Hier ist es notwendig, dass eine sichere Zuordnung der verschiedenen Sicherheitssteuerungen zu den einzelnen industriellen Lokalnetzen erfolgt.

Aus der WO 2007/051595 A1 ist ein Verfahren zum Betreiben einer Sicherheitssteuerung und ein Automatisierungsnetzwerk mit einem eine Sicherheitssteuerung ausführendem Master-Teilnehmer und wenigstens einem sicherheitsrelevanten Slave-Teilnehmer bekannt, bei dem im Rahmen einer Datenübertragung mit Hilfe einer Überprüfung der mit den Daten mit gesandten Kennung im Rahmen einer CRC-Summenberechnung verifiziert wird, ob eine korrekte Datenübertragung stattgefunden hat, um dann bei einer Abweichung das Automatisierungssystem ggf. in einen sicheren Zustand überzuführen.

Aufgabe der vorliegenden Erfindung ist es, ein Verfahren zum Betreiben von Sicherheitssteuerungen und ein Netzwerk von Automatisierungsnetzwerken bereitzustellen, das automatisch eine sichere Inbetriebnahme und einen sicheren Austausch sicherheitsrelevanter Teilnehmer ermöglichen.

Diese Aufgabe wird mit einem Verfahren gemäß Anspruch 1 und einem Netzwerk gemäß Anspruch 4 gelöst. Bevorzugte Weiterbildungen sind in den abhängigen Ansprüchen angegeben.

Gemäß der Erfindung wird zum Betreiben einer Sicherheitssteuerung auf einem Automatisierungsnetzwerk mit einem die Sicherheitssteuerung ausführenden Master-Teilnehmer der Sicher-Inbetriebnahme und einen sicheren Austausch sicherheitsrelevanter Teilnehmer ermöglicht.

Diese Aufgabe wird mit einem Verfahren gemäß Anspruch 1 und einem Automatisierungsnetzwerk gemäß Anspruch 5 gelöst. Bevorzugte Weiterbildungen sind in den abhängigen Ansprüchen angegeben.

Gemäß der Erfindung wird zum Betreiben einer Sicherheitssteuerung auf einem Automatisierungsnetzwerk mit einem die Sicherheitssteuerung ausführenden Master-Teilnehmer der Sicherheitssteuerung eine Kennung zugeordnet. Der Master-Teilnehmer überprüft beim Laden der Sicherheitssteuerung, ob die der Sicherheitssteuerung zugeordnete Kennung mit der aus der Sicherheitssteuerung berechneten Kennung übereinstimmt. Beim Festellen einer Abweichung geht das Automatisierungsnetzwerk in einen sicheren Zustand über.

Mit der Absicherung der Sicherheitssteuerung durch eine Kennung und der Überprüfung im Master-Teilnehmer des Automatisierungsnetzwerkes beim Hochfahren, ob die aus der Sicherheitssteuerung berechnete Kennung der der Sicherheitssteuerung zugeordneten Kennung entspricht, lässt sich vollautomatisch auf einfache Weise eine Inbetriebnahme des Automatisierungsnetzwerkes mit sicherheitsrelevanten Teilnehmern und hierbei insbesondere eine Inbetriebnahme des sicherheitsrelevanten Master-Teilnehmers ausführen. Mit der zusätzlichen Kennung der Sicherheitssteuerung ist ferner eine eindeutige Identifizierung im Rahmen einer automatischen Überprüfung möglich. Hierdurch werden zuverlässig Fehler bei der Inbetriebnahme vermieden, da gewährleistet wird, dass keine falsche Sicherheitssteuerung in den Master-Teilnehmer geladen wird. Dies gilt insbesondere auch dann, wenn der sicherheitsrelevante Master-Teilnehmer mit weiteren sicherheitsrelevanten Master-Teilnehmern, auf denen ein unterschiedliches Sicherheitsprogramm läuft, vernetzt ist, da die der jeweiligen Sicherheitssteuerung zugeordnete Kennung eine eindeutige Zuordnung zu dem einzelnen Automatisierungsnetzwerk ermöglicht.

Gemäß einer bevorzugten Ausführungsform wird beim Hochfahren des Automatisierungsnetzwerkes mithilfe eines Konfigurationsteilnehmers überprüft, ob im Master-Teilnehmer die Sicherheitssteuerung gespeichert ist, und, wenn die Sicherheitssteuerung im Master-Teilnehmer nicht gespeichert ist, die Sicherheitssteuerung zusammen mit der der Sicherheitssteuerung zugeordneten Kennung in den Master-Teilnehmer geladen.

Diese Vorgehensweise ermöglicht eine sichere und zuverlässige automatische Inbetriebnahme bzw. ein sicheres und zuverlässiges automatisches Update der Sicherheitssteuerung auf der Steuerungsebene des Automatisierungsnetzwerkes durch den Konfigurationsteilnehmer.

Gemäß einer weiteren bevorzugten Ausführungsform wird beim Hochfahren des Automatisierungsnetzwerkes vom Master-Teilnehmer weiter überprüft, ob in einem im Rahmen der Sicherheitssteuerung zu überwachenden Slave-Teilnehmer des Automatisierungsnetzwerkes eine einer Sicherheitssteuerung zugeordnete Kennung gespeichert ist. Wenn keine Kennung im Slave-Teilnehmer gespeichert ist, wird die der Sicherheitssteuerung im Master-Teilnehmer zugeordnete Kennung in den Slave-Teilnehmer geladen. Wenn eine Kennung im Slave-Teilnehmer gespeichert ist, vergleicht der Master-Teilnehmer die der Sicherheitssteuerung im Master-Teilnehmer zugeordnete Kennung mit der im Slave-Teilnehmer gespeicherten Kennung. Bei Festellen einer Abweichung zwischen den Kennungen geht das Automatisierungsnetzwerk in einen sicheren Zustand über.

Diese Vorgehensweise sorgt dafür, dass eine automatische Inbetriebnahme von sicherheitsrelevanten Geräten auf der Aktor-/Sensorebene des Automatisierungsnetzwerkes zuverlässig und sicher vorgenommen werden kann. Die Steuerungsebene in Form des Master-Teilnehmers vergleicht die der Sicherheitssteuerung zugeordnete Kennung, die im Master-Teilnehmer gespeichert ist, mit in den sicherheitsrelevanten Slave-Teilnehmer gespeicherten Kennungen, bevor der Slave-Teilnehmer in Betrieb genommen wird. Mit dieser Vorgehensweise kann sicher und zuverlässig eine automatische Inbetriebnahme von Geräten auf der Aktor-/Sensorebene in Automatisierungsnetzwerken vorgenommen werden.

Die Erfindung wird anhand der beigefügten Zeichnungen näher erläutert.

Es zeigen
Fig. 1 schematisch ein Automatisierungsnetzwerk mit einem Sicherheitsbereich, auf dem eine Sicherheitssteuerung betrieben wird;
Fig. 2 zwei gekoppelte Automatisierungsnetzwerke mit jeweils einem Sicherheitsbereich, der jeweils mit einem eigenständige Sicherheitssteuerung betrieben wird; und
Fig. 3A bis C ein Ablaufschemata zum Hochfahren eines Automatisierungsnetzwerkes.

In der Industrieautomatisierung werden Automatisierungsnetzwerke eingesetzt, bei denen die dezentral angeordneten Geräte einer Aktor-/Sensorebene wie E/A-Module, Messwerterfasser, Antriebe, Ventile etc. über ein leistungsfähiges Echtzeitkommunikationssystem mit Automatisierungsrechnern einer Steuerungsebene kommunizieren. Die Teilnehmer im Automatisierungsnetzwerk können durch Punkt-zu-Punkt-Verbindungen oder durch ein Bussystem miteinander verbunden sein. Als Bussystem wird dabei vorzugsweise ein Feldbussystem eingesetzt. Das Automatisierungsnetzwerk ist in der Regel hierarchisch aufgebaut und arbeitet nach dem Master-Slave-Prinzip. Die Master-Teilnehmer sind der Steuerungsebene zugeordnet und stellen die aktiven Teilnehmer dar, die eine Zugriffsberechtigung auf die Kommunikationsverbindungen im Automatisierungsnetzwerk haben und den Datentransfer bestimmen. Die Slave-Teilnehmer werden der Sensor-/Aktorebene zugerechnet und bilden die passiven Teilnehmer. Sie haben keine eigenständige Zugriffsberechtigung auf die Kommunikationsverbindungen, d.h. sie dürfen empfangene Daten nur quittieren und auf Anfragen eines Master-Teilnehmers Daten an diesen übermitteln.

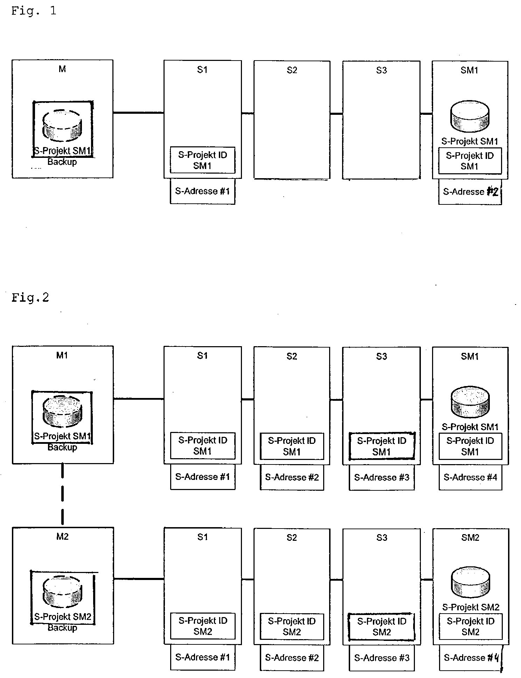

In Fig. 1 ist schematisch die Grundstruktur eines Automatisierungsnetzwerkes dargestellt. Das Automatisierungsnetzwerk weist zwei Master-Teilnehmer M, SM1, die die Steuerungsebene bilden, und drei Slave-Teilnehmer S1, S2, S3, die die Aktor-/Sensorebene repräsentieren, auf. Alle Teilnehmer im Automatisierungsnetzwerk sind über einen seriellen Bus miteinander verbunden, über den der Datenaustausch zwischen den Teilnehmern stattfindet. Der Datenaustausch zwischen den Teilnehmern wird von den Master-Teilnehmern in der Regel in Form von Datenpaketen organisiert, die sich aus Steuerdaten und Nutzdaten zusammensetzen, wobei die Steuerdaten im Datenpaket eine Adresseninformation enthalten. Der Datenaustausch kann dabei zum Beispiel auf der Grundlage des Ethernetprotokolls erfolgen, das Datenpakete mit einer Länge bis zu 1.500 Bytes bei gleichzeitig hoher Übertragungsgeschwindigkeit von 100 MBit/sec ermöglicht.

Eine wesentliche Anforderung an das Automatisierungsnetzwerk ist es sicherzustellen, dass von einem Ausfall eines Teilnehmers bzw. des gesamten Automatisierungsnetzes keine Gefahr für Mensch und Umwelt ausgeht. Deshalb muss auf der Steuerungsebene des Automatisierungsnetzwerkes neben den normalen Steuerungsfunktionen noch eine Sicherheitssteuerung ausgeführt werden, die beim Ausfall sicherheitsrelevanter Teilnehmer im Automatisierungsnetzwerk gewährleistet, dass das Automatisierungsnetzwerk nach dem so genannten Fail-Safe-Prinzip automatisch in einen sicheren Zustand übergeht. Eine solcher sicherer Zustand ist z. B. eine Notausschaltung des Automatisierungsnetzwerkes.

Da im Allgemeinen nicht alle Teilnehmer im Automatisierungsnetzwerk sicherheitsrelevant sind und die Anzahl der Sicherheitsfunktionen in einem Automatisierungsnetzwerk in der Regel geringer ist als die Anzahl der nicht sicherheitsrelevanten Steuerfunktionen, wird im Automatisierungsnetzwerk im Allgemeinen ein Sicherheitsbereich festgelegt. In dem in Fig. 1 dargestellten Automatisierungsnetzwerk wird der Sicherheitsbereich durch den einen sicherheitsrelevanten Master-Teilnehmer SM1, der im Weiteren auch als Sicherheitsmaster-Teilnehmer SM1 bezeichnet wird, und einen sicherheitsrelevanten Slave-Teilnehmer S1, der im Weiteren auch als Sicherheitsslave-Teilnehmer S1 bezeichnet wird, gebildet.

Im Sicherheitsmaster SM1 ist eine Sicherheitssteuerung S-Projekt-SM1, d. h. eine anlagenspezifisch sichere Konfiguration in einem lokalen Speicher abgespeichert. Diese anlagenspezifisch sichere Konfiguration legt die Kommunikationsverbindung zwischen dem Sicherheitsmaster-Teilnehmer SM1 und dem Sicherheitsslave-Teilnehmer S1 fest. Zur eindeutigen Identifizierung dieser Sicherheitsverbindung besitzt der Sicherheitsmaster-Teilnehmer SM1 und der Sicherheitsslave-Teilnehmer S1 jeweils eine eindeutige Sicherheitsadresse S-Adresse#1, S-Adresse#2, über die sich die Sicherheitsteilnehmer gegenseitig ansprechen. Der Datenaustausch zwischen den Sicherheitsteilnehmern erfolgt auf der Grundlage eines speziellen Sicherheitsprotokolls, das einen fehlerfreien Datenaustausch zwischen den Sicherheitsteilnehmern im Rahmen der Sicherheitssteuerung gewährleistet.

Die im in Fig. 1 dargestellten Automatisierungsnetzwerk weiter vorhandenen nicht sicherheitsrelevanten Slave-Teilnehmer S2, S3 werden von dem zweiten Master-Teilnehmer M gesteuert, der im Weiteren auch als Standardmaster-Teilnehmer M bezeichnet wird. Der Standardmaster-Teilnehmer M dient zusätzlich als Konfigurationsteilnehmer für die Sicherheitssteuerung im Automatisierungsnetzwerk. In seiner Funktion als Konfigurationsteilnehmer umfasst der Standardmaster-Teilnehmer M ein Backup-System, das einen Backup-Speicher aufweist, in dem die Sicherheitssteuerung S-Projekt-SM1 abgelegt ist. Das Backup-System des Standardmaster-Teilnehmer M besitzt darüber hinaus ein sicheres Programmierwerkzeug, das eine sichere Datenübertragung zwischen dem Backup-Speicher und dem Sicherheitsmaster-Teilnehmer SM1 gewährleistet.

Alternativ zu der in Fig. 1 gezeigten Ausführungsform kann der Konfigurationsteilnehmer jedoch auch ein anderer nicht sicherheitsrelevanter Teilnehmer im Automatisierungsnetzwerk sein. Darüber hinaus kann als Konfigurationsteilnehmer auch ein über ein weiteres Netzwerk angeschlossener Teilnehmer, z.B. ein Teilnehmer aus der dem Automatisierungsnetzwerk übergeordneten Datenmanagementebene eingesetzt werden. Statt, wie in Fig. 1 dargestellt, die Sicherheitsfunktionen von den nicht sicherheitsrelevanten Steuerungsfunktionen durch Vorsehen separater Master-Teilnehmer zu trennen, d. h. einen Sicherheitsmaster-Teilnehmer für die Sicherheitsfunktionen und einen Standardmaster-Teilnehmer für die nicht sicherheitsrelevanten Steuerungsfunktionen zu verwenden, besteht auch die Möglichkeit auf einen einzelnen Master-Teilnehmer sowohl die sicherheitsrelevanten Steuerungsfunktionen als auch die nicht sicherheitsrelevanten Steuerungsfunktionen auszuführen, wobei jedoch dann gewährleistet sein muss, dass die nicht sicherheitsrelevanten Steuerungsfunktionen die sicherheitsrelevanten Steuerfunktionen nicht beeinträchtigen.

Um im in Fig. 1 gezeigten Automatisierungsnetzwerk eine vollautomatische Integration sicherheitsrelevanter Teilnehmer im Rahmen eines Teilnehmeraustausches oder bei einer Erst-Inbetriebnahme zu ermöglichen, ist der Sicherheitssteuerung S-Projekt-SM1, d. h. der anlagespezifisch sicheren Konfiguration, eine Kennung S-Projekt-ID-SM1 zugeordnet. Diese Kennung S-Projekt-ID-SM1 kann eine Prüfsumme des Sicherheitssteuerprogramms sein. Es besteht jedoch die Möglichkeit, auch eine andere Kennungen, die sich aus der Sicherheitssteuerung mithilfe eines Berechnungsverfahrens ermitteln lässt, einzusetzen. Die Kennung S-Projekt-ID-SM1 der Sicherheitssteuerung S-Projekt-SM1 ist in allen sicherheitsrelevanten Teilnehmer gespeichert und gewährleistet, dass ein Teilnehmeraustausch bzw. eine Neuinbetriebnahme zuverlässig und sicher erfolgen kann.

Eine Erst-Inbetriebnahme einer Sicherheitssteuerung auf einem Sicherheitsmaster-Teilnehmer, z.B. nach einem Austausch des Sicherheitsmaster-Teilnehmers oder im Rahmen eines Updates der Sicherheitssteuerung, erfolgt über einen Konfigurationsteilnehmer, der ein sicheres Programmierwerkzeug besitzt. Das sichere Programmierwerkzeug lädt die Sicherheitssteuerung mit einer der Sicherheitssteuerung zugeordneten Kennung in den Sicherheitsmaster-Teilnehmer. Der Sicherheitsmaster-Teilnehmer überprüft, ob die übertragene Kennung mit einer aus der Sicherheitssteuerung berechneten Kennung übereinstimmt. Stellt der Sicherheitsmaster-Teilnehmer dabei eine Abweichung zwischen den Kennungen fest, geht das Automatisierungssystem gemäß dem Fail-Safe-Prinzip in einen sicheren Zustand über. Im Fall einer Übereinstimmung zwischen den Kennungen legt der Sicherheitsmaster-Teilnehmer die Sicherheitssteuerung und die zugehörige Kennung in einem im Sicherheitsmaster-Teilnehmer vorgesehenen lokalen Speicher ab.

Wenn die Sicherheitssteuerung nicht nur auf dem Sicherheitsmaster-Teilnehmer sondern im gesamten Automatisierungsnetzwerk im Rahmen einer Erst-Inbetriebnahme initialisiert werden soll, lädt der Konfigurationsteilnehmer nach der erfolgreichen Übertragung der Sicherheitssteuerung und der zugeordneten Kennung auf den Sicherheitsmaster-Teilnehmer mithilfe seines sicheren Programmierwerkzeuges ferner die der Sicherheitssteuerung zugeordneten Kennung in im Rahmen der Sicherheitssteuerung zu überwachende Sicherheitsslave-Teilnehmer. Alternativ kann die der Sicherheitssteuerung zugeordnete Kennung auch durch den Sicherheitsmaster-Teilnehmer in die Sicherheitsslave-Teilnehmer eingespeichert werden. Zudem legt der Konfigurationsteilnehmer nach Abschluss der Initialisierung die Sicherheitssteuerung und die zugehörige Kennung in einem Backup-Speicher ab.

Im regulären Betrieb lädt der Sicherheitsmaster-Teilnehmer beim Hochfahren die in seinem lokalen Speicher abgelegte Sicherheitssteuerung zusammen mit der der Sicherheitssteuerung zugeordneten Kennung und überprüft, ob die abgelegte Kennung mit der aus der Sicherheitssteuerung berechneten Kennung übereinstimmt. Stellt der Sicherheitsmaster-Teilnehmer dabei eine Abweichung zwischen den Kennungen fest, geht das Automatisierungssystem gemäß dem Fail-Safe-Prinzip in einen sicheren Zustand über.

Nach Abschluss des Hochfahrens des Sicherheitsmaster-Teilnehmers, dann wenn das Automatisierungsnetzwerk nicht in einen sicheren Zustand übergegangen ist, prüft der Sicherungsmaster-Teilnehmer, ob in den im Rahmen der Sicherheitssteuerung zu überwachenden Sicherheitsslave-Teilnehmern die der Sicherheitssteuerung zugeordnete Kennung gespeichert ist. Wenn keine Kennung in den Sicherheitsslave-Teilnehmern gespeichert ist, weil die Sicherheitsslave-Teilnehmer z.B. ausgetauscht wurden, lädt der Sicherheitsmaster-Teilnehmer die der Sicherheitssteuerung zugeordnete Kennung in die Sicherheitsslave-Teilnehmer. Wenn eine Kennung in den Sicherheitsslave-Teilnehmern gespeichert ist, vergleicht der Sicherheitsmaster-Teilnehmer die der Sicherheitssteuerung zugeordnete Kennung mit der jeweils in den Sicherheitsslave-Teilnehmern gespeicherten Kennung. Bei Feststellen einer Abweichung zwischen den Kennungen geht das Automatisierungsnetzwerk gemäß dem Fail-Safe-Prinzip in einen sicheren Zustand über.

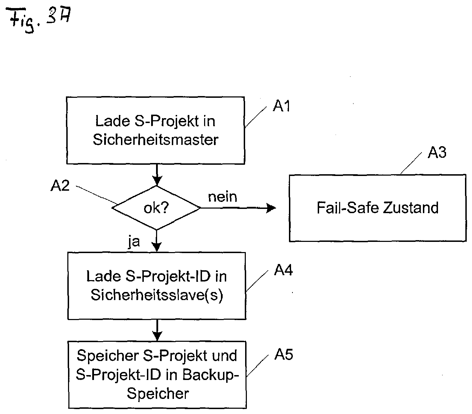

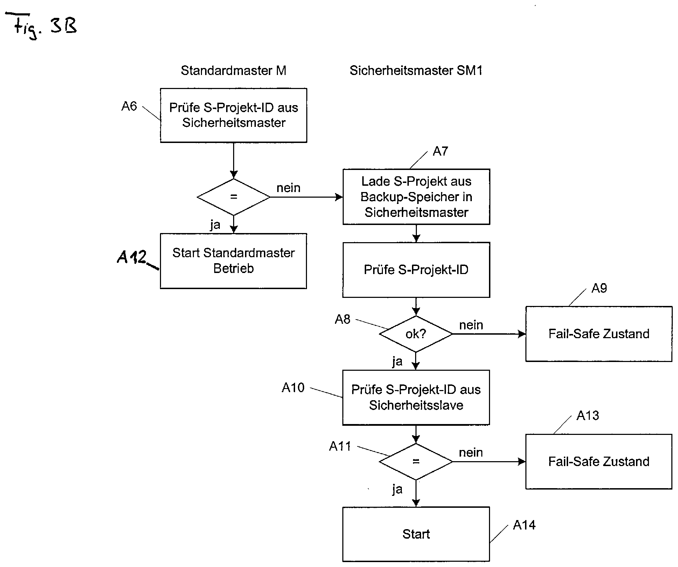

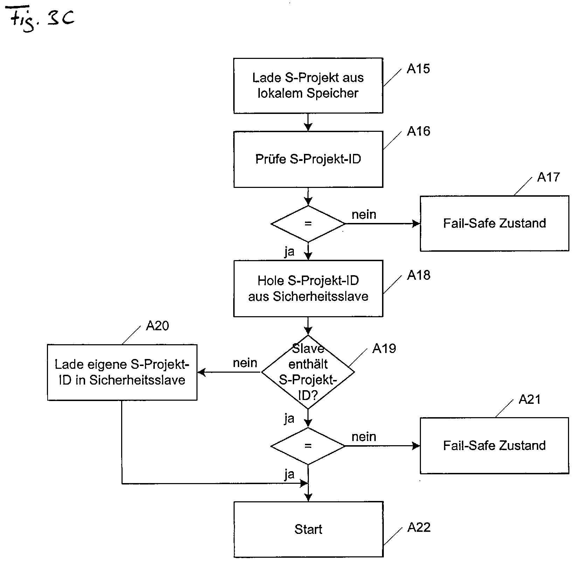

Bei dem in Fig. 1 gezeigten Automatisierungsnetzwerk lassen sich folgende Anwendungsfälle betrachten, deren Ablaufpläne in den Figuren 3A, 3B und 3C dargestellt sind.

### Fall 1 (Fig. 3A):

Die Sicherheitssteuerung S-Projekt-SM1 wird im Automatisierungsnetzwerk neu eingespielt. Die anlagenspezifisch sichere Konfiguration ist im Standardmaster-Teilnehmer M abgelegt. Sowohl der Sicherheitsmaster-Teilnehmer SM1 als auch der Sicherheitsslave-Teilnehmer S1 sind nicht konfiguriert. Der Standardmaster-Teilnehmer M lädt im Schritt A1 mit seinem sicheren Programmierwerkzeug die Sicherheitssteuerung S-Projekt-SM1 mit der der Sicherheitssteuerung zugeordneten Kennung S-Projekt-ID-SM1 in den Sicherheitsmaster-Teilnehmer SM1. Der Sicherheitsmaster-Teilnehmer SM1 überprüft im Schritt A2, ob die übertragene Kennung S-Projekt-ID-SM1 mit einer aus der Sicherheitssteuerung S-Projekt-SM1 berechneten Kennung übereinstimmt. Stellt der Sicherheitsmaster-Teilnehmer SM1 dabei eine Abweichung zwischen den Kennungen fest, geht das Automatisierungssystem gemäß dem Fail-Safe-Prinzip im Schritt A3 in einen sicheren Zustand über.

Im Falle einer Übereinstimmung speichert im Schritt A4 der Sicherheitsmaster-Teilnehmer SM1 die der Sicherheitssteuerung zugeordnete Kennung S-Projekt-ID-SM1 in den gemäß der Sicherheitssteuerung zu überwachenden Sicherheitsslave-Teilnehmer S1 ein. Das Speichern der der Sicherheitssteuerung zugeordneten Kennung S-Projekt-ID-SM1 in den zu überwachenden Sicherheitsslave-Teilnehmer S1 kann auch durch den Standardmaster-Teilnehmer M erfolgen. Die Sicherheitssteuerung S-Projekt-SM1 im Automatisierungsnetzwerk ist dann betriebsbereit. Zudem legt der Standardmaster-Teilnehmer M im Schritt A5 die Sicherheitssteuerung S-Projekt-SM1 und die zugehörige Kennung S-Projekt-ID-SM1 in seinem Backup-Speicher ab.

### Fall 2 (Fig. 3B)

Im Sicherheitsmaster-Teilnehmer SM1 liegt keine Sicherheitssteuerung vor, weil der Sicherheitsmaster-Teilnehmer SM1 z.B. ausgetauscht wurde, oder der Sicherheitsmaster-Teilnehmer SM1 enthält eine andere als die erwartete Sicherheitssteuerung, weil z.B. ein Update noch nicht durchgeführt wurde. Der Standardmaster-Teilnehmer M untersucht beim Hochfahren des Automatisierungsnetzwerkes im Schritt A6, ob die der Sicherheitssteuerung S-Projekt-SM1 zugeordnete Kennung im Sicherheitsmaster-Teilnehmer SM1 vorliegt. Im Falle einer Übereinstimmung geht der Standardmaster-Teilnehmer M im Schritt A12 in den Normalbetrieb über.

Stellt der Standardmaster-Teilnehmer M fest, dass der Sicherheitsmaster-Teilnehmer SM1 keine gültige Konfiguration besitzt, lädt der Standardmaster-Teilnehmer M daraufhin die Sicherheitssteuerung S-Projekt-SM1 aus seinem Backup-Speicher zusammen mit der der Sicherheitssteuerung zugeordneten Kennung S-Projekt-ID-SM1 in den Sicherheitsmaster-Teilnehmer SM1 im Schritt A7. Der Sicherheitsmaster-Teilnehmer SM1 prüft im Schritt A8, ob die hochgeladene Kennung S-Projekt-ID-SM1 mit der aus der Sicherheitssteuerung S-Projekt-SM1 berechneten Kennung übereinstimmt. Wenn eine Abweichung zwischen den Kennungen vorliegt, geht das Automatisierungsnetzwerk im Schritt A9 in einen sicheren Zustand über.

Im Falle einer Übereinstimmung ruft der Sicherheitsmaster-Teilnehmer SM1 beim Hochfahren der Kommunikationsverbindung zum Sicherheitsslave-Teilnehmer S1 im Schritt A10 die Kennung aus dem Sicherheitsslave-Teilnehmer S1 ab. Der Sicherheitsmaster-Teilnehmer SM1 vergleicht im Schritt A11 die Kennung mit der der Sicherheitssteuerung zugeordneten Kennung S-Projekt-ID-SM1. Bei Feststellen einer Diskrepanz zwischen den Kennungen geht das Automatisierungsnetzwerk im Schritt A13 in einen sicheren Zustand über. Andernfalls wird der normale Betrieb im Schritt A14 aufgenommen.

### Fall 3 (Fig. 3C)

Im normalen Betrieb beim Hochfahren des Automatisierungsnetzwerkes ermittelt der Sicherheitsmaster-Teilnehmer SM1 nach dem Laden der Sicherheitssteuerung S-Projekt-SM1 im Schritt A15 die Kennung der geladenen Sicherheitssteuerung. Im Schritt A16 vergleicht der Sicherheitsmaster-Teilnehmer SM1 die berechnete Kennung mit der der Sicherheitssteuerung zugeordneten Kennung S-Projekt-ID-SM1. Stellt der Sicherheitsmaster-Teilnehmer SM1 eine Abweichung zwischen den Kennungen fest, geht das Automatisierungssystem gemäß dem Fail-Safe-Prinzip im Schritt A17 in einen sicheren Zustand über.

Im Falle einer Übereinstimmung der Kennungen nach Abschluss des Hochfahrens des Sicherheitsmaster-Teilnehmers SM1 ruft der Sicherheitsmaster-Teilnehmer SM1 im Schritt A18 vom im Rahmen der Sicherheitssteuerung zu überwachenden Sicherheitsslave-Teilnehmer S1 die dort gespeicherte Kennung ab. Wenn der Sicherheitsmaster-Teilnehmer SM1 im Schritt A19 feststellt, dass keine Kennung im Sicherheitsslave-Teilnehmer S1 gespeichert ist, lädt der Sicherheitsmaster-Teilnehmer in Schritt A20 die der Sicherheitssteuerung zugeordnete Kennung S-Projekt-ID-SM1 in den Sicherheitsslave-Teilnehmer S1 und geht im Schritt A22 in den normalen Betrieb über. Wenn eine Kennung im Sicherheitsslave-Teilnehmer S1 gespeichert ist, vergleicht der Sicherheitsmaster-Teilnehmer SM1 die der Sicherheitssteuerung zugeordnete Kennung S-Projekt-ID-SM1 mit der im Sicherheitsslave-Teilnehmer gespeicherten Kennung. Bei Feststellen einer Abweichung zwischen den Kennungen geht das Automatisierungsnetzwerk im Schritt A21 in einen sicheren Zustand über. Andernfalls wird der normale Betrieb im Schritt A22 aufgenommen.

Mit der erfindungsgemäßen Zuordnung einer Kennung zur Sicherheitssteuerung besteht neben der vollautomatischen Inbetriebnahme von sicherheitsrelevanten Teilnehmern auch die Möglichkeit, eine anlagenweit eindeutige Zuordnung der sicherheitsrelevanten Teilnehmer zu garantieren. Fig. 2 zeigt eine Ausgestaltung bei der zwei Automatisierungsnetzwerke, die verschiedenen Anlagenteilen zugeordnet sind und getrennte Sicherheitssteuerungen S-Projekt-SM1, S-Projekt-SM2 ausführen, miteinander vernetzt sind. Beide Automatisierungsnetzwerke weisen dabei jeweils einen Sicherheitsmaster-Teilnehmer SM1, SM2 auf, dem im Rahmen einer auszuführenden Sicherheitssteuerung jeweils drei Sicherheitsslave-Teilnehmer S1, S2, S3 zugeordnet sind. Die Teilnehmerverbindungen der Sicherheitssteuerungen in den einzelnen Automatisierungsnetzwerken sind dabei über Sicherheitsadressen S-Adresse #1, S-Adresse #2, S-Adresse #3, #S-Adresse #4 festgelegt. Die beiden Automatisierungsnetze weisen ferner jeweils einen Standardmaster-Teilnehmer M1, M2 auf, der zugleich als Konfigurationsteilnehmer für die Sicherheitssteuerungen S-Projekt-SM1, S-Projekt-SM2 der einzelnen Automatisierungsnetzwerke dient und hierzu jeweils einen Backup-System aufweist.

Da die beiden Automatisierungsnetzwerke unterschiedliche Sicherheitssteuerungen S-Projekt-SM1, S-Projekt-SM2 ausführen, sorgt die den jeweiligen Sicherheitssteuerungen zugeordnete eindeutige Kennungen S-Projekt-ID-SM1, S-Projekt-ID-SM2 dafür, dass anlagenweit eine eindeutige Zuordnung der Master-Slave-Teilnehmern zu den einzelnen Sicherheitssteuerungen gegeben ist. Es kann so vermieden werden, dass durch die Verknüpfung der beiden Automatisierungsnetzwerke der Sicherheitsmaster-Teilnehmer des einen Automatisierungsnetzwerkes aufgrund gleicher Sicherheitsadressen versehentlich einen Sicherheitsslave-Teilnehmer in dem anderen Automatisierungsnetzwerk anspricht.

## Patentansprüche

1. Verfahren zum Betreiben einer ersten Sicherheitssteuerung (Projekt-SM1) auf einem ersten Automatisierungsnetzwerk und einer zweiten Sicherheitssteuerung (Projekt-SM2) auf einem zweiten Automatisierungsnetzwerk,
wobei das erste und das zweite Automatisierungsnetzwerk miteinander vernetzt sind,
wobei die erste und die zweite Sicherheitssteuerung (Projekt-SM1, Projekt-SM2 jeweils einen die Sicherheitssteuerung ausführenden Master-Teilnehmer (SM1, SM2) und wenigstens einen sicherheitsrelevanten Slave-Teilnehmer (S1) aufweisen,
wobei die erste und die zweite Sicherheitssteuerung jeweils eine anlagenspezifisch sichere Konfiguration des Master-Teilnehmers und des Slave-Teilnehmers vorgeben und eine Sicherheitsverbindung zwischen dem Master-Teilnehmer und dem Slave-Teilnehmer festlegen,
wobei der Master-Teilnehmer (SM1, SM2) und der Slave-Teilnehmer (S1) jeweils eine eindeutige Sicherheitsadresse (S-Adresse) im jeweiligen Automatisierungsnetzwerk besitzen, über die sich die Teilnehmer gegenseitig ansprechen, wobei der Datenaustausch zwischen den Teilnehmern auf der Grundlage eines Sicherheitsprotokolls erfolgt,
wobei der ersten und der zweiten Sicherheitssteuerung jeweils eine Kennung (Projekt-ID-SM1, Projekt-ID-SM2) zugeordnet ist, wobei bei Inbetriebnahme des ersten und des zweiten Automatisierungsnetzwerkes der zugeordnete Master-Teilnehmer (SM1, SM2) nach einem Laden der entsprechenden Sicherheitssteuerung (Projekt-SM1) überprüft, ob die der Sicherheitssteuerung zugeordnete Kennung (Projekt-ID-SM1, Projekt-ID-SM2) mit einer aus der Sicherheitssteuerung berechneten Kennung übereinstimmt, wobei im Falle des Feststellens einer Abweichung zwischen den Kennungen das Automatisierungsnetzwerk in einen sicheren Zustand übergeht, und
wobei im Falle einer Übereinstimmung der Kennungen der erste und der zweite Master-Teilnehmer (SM1, SM2) jeweils weiter überprüft, ob im Slave-Teilnehmer (S1) eine einer Sicherheitssteuerung zugeordnete Kennung gespeichert ist, wobei, wenn keine Kennung im Slave-Teilnehmer gespeichert ist, der Master-Teilnehmer die der jeweiligen Sicherheitssteuerung zugeordnete Kennung (Projekt-ID-SM1, Projekt-ID-SM2) in den Slave-Teilnehmer lädt, und wobei, wenn eine Kennung im Slave-Teilnehmer gespeichert ist, der Master-Teilnehmer (SM1, SM2) die der jeweiligen Sicherheitssteuerung (Projekt-SM1, Projekt-ID-SM2) zugeordnete Kennung (Projekt-ID-SM1, Projekt-ID-SM2) mit der im Slave-Teilnehmer (S1) gespeicherten Kennung vergleicht, wobei im Falle des Feststellens einer Abweichung zwischen den Kennungen das Automatisierungsnetzwerk in einen sicheren Zustand übergeht.

2. Verfahren nach Anspruch 1,
wobei bei Inbetriebnahme des Automatisierungsnetzwerkes überprüft wird, ob im Master-Teilnehmer (SM1, SM2) eine Sicherheitssteuerung gespeichert ist, und
wobei, wenn keine Sicherheitssteuerung im Master-Teilnehmer gespeichert ist, die Sicherheitssteuerung (Projekt-SM1, Projekt-SM2) mit der der Sicherheitssteuerung zugeordneten Kennung (Projekt-ID-SM1, Projekt-ID-SM2) in den Master-Teilnehmer geladen wird und der Master-Teilnehmer überprüft, ob die der gespeicherten Sicherheitssteuerung zugeordnete Kennung mit einer aus der Sicherheitssteuerung berechneten Kennung übereinstimmt, wobei im Falle des Feststellens einer Abweichung zwischen den Kennungen das Automatisierungsnetzwerk in einen sicheren Zustand übergeht.

3. Verfahren nach Anspruch 1 oder 2, wobei die Kennung (Projekt-ID-SM1, Projekt-ID-SM2) eine Prüfsumme der Sicherheitssteuerung ist.

4. Netzwerk mit einem ersten Automatisierungsnetzwerk, das einen eine erste Sicherheitssteuerung (Projekt-SM1) ausführenden Master-Teilnehmer (SM1) und wenigstens einen sicherheitsrelevanten Slave-Teilnehmer (S1) aufweist, und einem zweiten Automatisierungsnetzwerk, das einen eine zweiten Sicherheitssteuerung (Projekt-SM2) ausführenden Master-Teilnehmer (SM2) und wenigstens einen sicherheitsrelevanten Slave-Teilnehmer (S1) aufweist,
wobei die erste und die zweite Sicherheitssteuerung jeweils eine anlagenspezifisch sichere Konfiguration des Master-Teilnehmers und des Slave-Teilnehmers vorgeben und eine Sicherheitsverbindung zwischen dem Master-Teilnehmer und dem Slave-Teilnehmer festlegen,
wobei der Master-Teilnehmer (SM1, SM2) und der Slave-Teilnehmer (S1) jeweils eine eindeutige Sicherheitsadresse (S-Adresse) im jeweiligen Automatisierungsnetzwerk besitzen, über die sich die Teilnehmer gegenseitig ansprechen, wobei der Datenaustausch zwischen den Teilnehmern auf der Grundlage eines Sicherheitsprotokolls erfolgt,
wobei der ersten und der zweiten Sicherheitssteuerung (Projekt-SM1, Projekt-SM2) jeweils eine Kennung (Projekt-ID-SM1, Projekt-ID-SM2) zugeordnet ist,
wobei der erste und der zweite Master-Teilnehmer (SM1, SM2) ausgelegt sind, bei Inbetriebnahme des jeweiligen Automatisierungsnetzwerkes nach einem Laden der entsprechenden Sicherheitssteuerung (Projekt-SM1, Projekt-SM2) zu überprüfen, ob die der Sicherheitssteuerung zugeordnete Kennung (Projekt-ID-SM1, Projekt-ID-SM2) mit einer aus der Sicherheitssteuerung berechneten Kennung übereinstimmt, wobei im Falle des Feststellens einer Abweichung zwischen den Kennungen das Automatisierungsnetzwerk in einen sicheren Zustand übergeht, und
wobei der erste und der zweite Master-Teilnehmer (SM1, SM2) weiter ausgelegt sind, im Falle einer Übereinstimmung der Kennungen zu überprüfen, ob im Slave-Teilnehmer (S1) eine einer Sicherheitssteuerung zugeordnete Kennung gespeichert ist, wenn keine Kennung im Slave-Teilnehmer gespeichert ist, die der jeweiligen Sicherheitssteuerung zugeordnete Kennung in den Slave-Teilnehmer zu laden, und, wenn eine Kennung im Slave-Teilnehmer gespeichert ist, die der jeweiligen Sicherheitssteuerung zugeordnete Kennung (Projekt-ID-SM1, Projekt-ID-SM2) mit der im Slave-Teilnehmer gespeicherten Kennung zu vergleichen, wobei im Falle des Feststellens einer Abweichung zwischen den Kennungen das Automatisierungsnetzwerk in einen sicheren Zustand übergeht.

5. Netzwerk nach Anspruch 4, mit einem Konfigurationsteilnehmer (M), der ausgelegt ist, bei Inbetriebnahme des Automatisierungsnetzwerkes zu überprüfen, ob im Master-Teilnehmer (SM1, SM2) eine Sicherheitssteuerung gespeichert ist, und, wenn keine Sicherheitssteuerung im Master-Teilnehmer gespeichert ist, die Sicherheitssteuerung (Projekt-SM1, Projekt-SM2) mit der der Sicherheitssteuerung zugeordneten Kennung (Projekt-ID-SM1, Projekt-ID-SM2) in den Master-Teilnehmer zu laden, wobei der Master-Teilnehmer ausgelegt ist, zu überprüfen, ob die der gespeicherten Sicherheitssteuerung zugeordnete Kennung mit einer aus der Sicherheitssteuerung berechneten Kennung übereinstimmt, wobei im Falle des Feststellens einer Abweichung zwischen den Kennungen das Automatisierungsnetzwerk in einen sicheren Zustand übergeht.

6. Netzwerk nach Anspruch 5, wobei der Konfigurationsteilnehmer (M) ein Backup-System mit einem Backup-Speicher aufweist, in dem die Sicherheitssteuerung abgelegt ist, und mit einem sicheren Programmierwerkzeug aufweist.

7. Netzwerk nach Anspruch 5 oder 6, mit einem weiteren Master-Teilnehmer (M) zum Steuern von nicht sicherheitsrelevanten Slave-Teilnehmern (S2, S3), der die Funktion des Konfigurationsteilnehmers umfasst.

## Claims

1. Method for operating a first safety controller (Projekt-SM1) on a first automation network and a second safety controller (Projekt-SM2) on a second automation network,
wherein the first and second automation networks are networked to one another,
wherein the first and second safety controllers (Projekt-SM1, Projekt-SM2) each have a master subscriber (SM1, SM2) implementing the safety controller and at least one safety-relevant slave subscriber (S1),
wherein the first and second safety controllers each predefine a configuration of the master subscriber and of the slave subscriber which is safe in a manner specific to the installation and stipulate a safety connection between the master subscriber and the slave subscriber,
wherein the master subscriber (SM1, SM2) and the slave subscriber (S1) each have a unique safety address (S-Adresse) in the respective automation network, via which the subscribers address one another, wherein data are interchanged between the subscribers on the basis of a safety protocol,
wherein an identifier (Projekt-ID-SM1, Projekt-ID-SM2) is respectively assigned to the first and second safety controllers,
wherein, upon activation of the first and second automation networks, the assigned master subscriber (SM1, SM2) checks, after the corresponding safety controller (Projekt-SM1) has been loaded, whether the identifier (Projekt-ID-SM1, Projekt-ID-SM2) assigned to the safety controller matches an identifier calculated from the safety controller, wherein the automation network changes to a safe state if a difference between the identifiers is determined, and
wherein, if the identifiers match, the first and second master subscribers (SM1, SM2) each also check whether the slave subscriber (S1) stores an identifier assigned to a safety controller, wherein, if the slave subscriber does not store an identifier, the master subscriber loads the identifier (Projekt-ID-SM1, Projekt-ID-SM2) assigned to the respective safety controller into the slave subscriber, and wherein, if the slave subscriber stores an identifier, the master subscriber (SM1, SM2) compares the identifier (Projekt-ID-SM1, Projekt-ID-SM2) assigned to the respective safety controller (Projekt-ID-SM1, Projekt-ID-SM2) with the identifier stored in the slave subscriber (S1), wherein the automation network changes to a safe state if a difference between the identifiers is determined.

2. Method according to Claim 1,
wherein, upon activation of the automation network, a check is carried out in order to determine whether the master subscriber (SM1, SM2) stores a safety controller, and
wherein, if the master subscriber does not store a safety controller, the safety controller (Projekt-SM1, Projekt-SM2) having the identifier (Projekt-ID-SM1, Projekt-ID-SM2) assigned to the safety controller is loaded into the master subscriber and the master subscriber checks whether the identifier assigned to the stored safety controller matches an identifier calculated from the safety controller, wherein the automation network changes to a safe state if a difference between the identifiers is determined.

3. Method according to Claim 1 or 2, wherein the identifier (Projekt-ID-SM1, Projekt-ID-SM2) is a checksum of the safety controller.

4. Network having a first automation network, which has a master subscriber (SM1) implementing a first safety controller (Projekt-SM1) and at least one safety-relevant slave subscriber (S1), and a second automation network, which has a master subscriber (SM2) implementing a second safety controller (Projekt-SM2) and at least one safety-relevant slave subscriber (S1), wherein the first and second safety controllers each predefine a configuration of the master subscriber and of the slave subscriber which is safe in a manner specific to the installation and stipulate a safety connection between the master subscriber and the slave subscriber,
wherein the master subscriber (SM1, SM2) and the slave subscriber (S1) each have a unique safety address (S-Adresse) in the respective automation network, via which the subscribers address one another, wherein data are interchanged between the subscribers on the basis of a safety protocol,
wherein an identifier (Projekt-ID-SM1, Projekt-ID-SM2) is respectively assigned to the first and second safety controllers (Projekt-SM1, Projekt-SM2),
wherein, upon activation of the respective automation network, the first and second master subscribers (SM1, SM2) are designed to check, after the corresponding safety controller (Projekt-SM1, Projekt-SM2) has been loaded, whether the identifier (Projekt-ID-SM1, Projekt-ID-SM2) assigned to the safety controller matches an identifier calculated from the safety controller, wherein the automation network changes to a safe state if a difference between the identifiers is determined, and
wherein, if the identifiers match, the first and second master subscribers (SM1, SM2) are also designed to check whether the slave subscriber (S1) stores an identifier assigned to a safety controller, to load the identifier assigned to the respective safety controller into the slave subscriber if the slave subscriber does not store an identifier, and to compare the identifier (Projekt-ID-SM1, Projekt-ID-SM2) assigned to the respective safety controller with the identifier stored in the slave subscriber if the slave subscriber stores an identifier, wherein the automation network changes to a safe state if a difference between the identifiers is determined.

5. Network according to Claim 4, having a configuration subscriber (M) which is designed to check, upon activation of the automation network, whether the master subscriber (SM1, SM2) stores a safety controller and, if the master subscriber does not store a safety controller, to load the safety controller (Projekt-SM1, Projekt-SM2) having the identifier (Projekt-ID-SM1, Projekt-ID-SM2) assigned to the safety controller into the master subscriber, wherein the master subscriber is designed to check whether the identifier assigned to the stored safety controller matches an identifier calculated from the safety controller, wherein the automation network changes to a safe state if a difference between the identifiers is determined.

6. Network according to Claim 5, wherein the configuration subscriber (M) has a backup system with a backup memory, which stores the safety controller, and with a safe programming tool.

7. Network according to Claim 5 or 6, having a further master subscriber (M) for controlling non-safety-relevant slave subscribers (S2, S3), which further master subscriber comprises the function of the configuration subscriber.

## Revendications

1. Procédé destiné à faire fonctionner une première commande de sécurité (Projet SM1) sur un premier réseau d'automatisation et une deuxième commande de sécurité (Projet SM2) sur un deuxième réseau d'automatisation ; selon lequel le premier et le deuxième réseau d'automatisation sont mis en interconnexion l'un avec l'autre ;
selon lequel la première et la deuxième commande de sécurité (Projet SM1, Projet SM2) présentent respectivement un abonné maître (SM1, SM2) qui exécute la commande de sécurité et au moins un abonné esclave (S1) qui relève de la sécurité ;
selon lequel la première et la deuxième commande de sécurité mettent respectivement en oeuvre une configuration sécurisée et spécifique à l'installation de l'abonné maître et de l'abonné esclave (S1) et définissent une connexion de sécurité entre l'abonné maître et l'abonné esclave (S1) ;
selon lequel l'abonné maître (SM1, SM2) et l'abonné esclave (S1) possèdent respectivement, dans le réseau d'automatisation respectif, une adresse de sécurité (adresse S) sans équivoque, par l'intermédiaire de laquelle les abonnés peuvent mutuellement se contacter et selon lequel l'échange de données entre les abonnés est réalisé sur la base d'un protocole de sécurité ;
selon lequel un identifiant (ID de projet SM1, ID de projet SM2) est respectivement associé à la première et à la deuxième commande de sécurité ;
selon lequel, lors de la mise en service du premier et du deuxième réseau d'automatisation, l'abonné maître (SM1, SM2) associé vérifie, après un chargement de la commande de sécurité (Projet SM1) correspondante, si l'identifiant (ID de projet SM1, ID de projet SM2) associé à la commande de sécurité est en conformité avec un identifiant calculé à partir de la commande de sécurité, selon lequel le réseau d'automatisation opère une commutation vers un état sécurisé en cas de constatation d'une divergence entre les identifiants ; et
selon lequel, en cas d'une concordance des identifiants, le premier et le deuxième abonné maître (SM1, SM2) vérifient en outre respectivement si un identifiant associé à une commande de sécurité est enregistré auprès de l'abonné esclave (S1), selon lequel l'abonné maître charge l'identifiant (ID de projet SM1, ID de projet SM2) associé à la commande de sécurité respective dans l'abonné esclave, si aucun identifiant n'est enregistré auprès de l'abonné esclave, et selon lequel l'abonné maître (SM1, SM2) compare l'identifiant (ID de projet SM1, ID de projet SM2) associé à la commande de sécurité (Projet SM1, ID de projet SM2) respective avec l'identifiant enregistré auprès de l'abonné esclave (S1), quand un identifiant est enregistré auprès de l'abonné esclave, et selon lequel le réseau d'automatisation opère une commutation vers un état sécurisé en cas de constatation d'une divergence entre les identifiants.

2. Procédé selon la revendication 1,
selon lequel le système vérifie si une commande de sécurité est enregistrée auprès de l'abonné maître (SM1, SM2), lors de la mise en service du réseau d'automatisation ; et
selon lequel la commande de sécurité (Projet SM1, Projet SM2) est chargée auprès de l'abonné maître avec l'identifiant (ID de projet SM1, ID de projet SM2) associé à la commande de sécurité, quand aucune commande de sécurité n'est enregistrée auprès de l'abonné maître, et l'abonné maître vérifie si l'identifiant associé à la commande de sécurité enregistrée est en conformité avec un identifiant calculé à partir de la commande de sécurité, selon lequel le réseau d'automatisation opère une commutation vers un état sécurisé en cas de constatation d'une divergence entre les identifiants.

3. Procédé selon la revendication 1 ou 2, selon lequel l'identifiant (ID de projet SM1, ID de projet SM2) est une somme de contrôle de la commande de sécurité.

4. Réseau avec un premier réseau d'automatisation qui présente un abonné maître (SM1) exécutant une première commande de sécurité (Projet SM1) et au moins un abonné esclave (S1) qui relève de la sécurité, et avec un deuxième réseau d'automatisation qui présente un abonné maître (SM2) exécutant une deuxième commande de sécurité (Projet SM2) et au moins un abonné esclave (S1) qui relève de la sécurité ;
selon lequel la première et la deuxième commande de sécurité mettent respectivement en oeuvre une configuration sécurisée et spécifique à l'installation de l'abonné maître et de l'abonné esclave et définissent une connexion de sécurité entre l'abonné maître et l'abonné esclave ;
selon lequel l'abonné maître (SM1, SM2) et l'abonné esclave (S1) possèdent respectivement, dans le réseau d'automatisation respectif, une adresse de sécurité (adresse S) sans équivoque, par l'intermédiaire de laquelle les abonnés peuvent mutuellement se contacter, et selon lequel l'échange de données entre les abonnés est réalisé sur la base d'un protocole de sécurité ;
selon lequel un identifiant (ID de projet SM1, ID de projet SM2) est respectivement associé à la première et à la deuxième commande de sécurité (Projet SM1, Projet SM2) ;
selon lequel, lors de la mise en service du réseau d'automatisation respectif, le premier et le deuxième abonné maître (SM1, SM2) sont configurés en vue de vérifier, après un chargement de la commande de sécurité (Projet SM1, Projet SM2) correspondante, si l'identifiant (ID de projet SM1, ID de projet SM2) associé à la commande de sécurité est en conformité avec un identifiant calculé à partir de la commande de sécurité, selon lequel le réseau d'automatisation opère une commutation vers un état sécurisé en cas de constatation d'une divergence entre les identifiants ; et
selon lequel le premier et le deuxième abonné maître (SM1, SM2) sont en outre configurés en vue de vérifier si, en cas d'une concordance des identifiants, un identifiant associé à une commande de sécurité est enregistré auprès de l'abonné esclave (S1), quand aucun identifiant n'est enregistré auprès de l'abonné esclave, en vue de charger l'identifiant associé à la commande de sécurité respective auprès de l'abonné esclave et en vue de comparer l'identifiant (ID de projet SM1, ID de projet SM2) respectif associé à la commande de sécurité avec l'identifiant enregistré auprès de l'abonné esclave, quand un identifiant est enregistré auprès de l'abonné esclave, et selon lequel le réseau d'automatisation opère une commutation vers un état sécurisé en cas de constatation d'une divergence entre les identifiants.

5. Réseau selon la revendication 4, avec un abonné de configuration (M), lequel est configuré en vue de vérifier si une commande de sécurité est enregistrée auprès de l'abonné maître (SM1, SM2) lors de la mise en service du réseau d'automatisation et, si aucune commande de sécurité n'est enregistrée auprès de l'abonné maître, en vue de charger la commande de sécurité (Projet SM1, Projet SM2) avec l'identifiant (ID de projet SM1, ID de projet SM2) associé à la commande de sécurité auprès de l'abonné maître, selon lequel l'abonné maître est configuré en vue de vérifier si l'identifiant associé à la commande de sécurité enregistrée est en conformité avec un identifiant calculé à partir de la commande de sécurité et selon lequel le réseau d'automatisation opère une commutation vers un état sécurisé en cas de constatation d'une divergence entre les identifiants.

6. Réseau selon la revendication 5, selon lequel l'abonné de configuration (M) présente un système de sauvegarde doté d'une mémoire de sauvegarde, dans laquelle la commande de sécurité est archivée, ainsi que d'un outil de programmation sécurisé.

7. Réseau selon la revendication 5 ou 6, avec un autre abonné maître (M) destiné à la commande d'abonnés esclaves (S2, S3) qui ne relèvent pas de la sécurité, lequel autre abonné maître comprend la fonction de l'abonné de configuration.
